# EUROPEAN PATENT SPECIFICATION

(11) **EP 2 798 910 B1**
(45) Date of publication and mention of the grant of the patent: **21.06.2017**
(21) Application number: 12812981.4
(22) Date of filing: 21.12.2012
(51) Int. Cl.: H05B 6/12

(54) **A WIRELESS KITCHEN APPLIANCE OPERATED ON AN INDUCTION HEATING COOKER**
AUF EINEM INDUKTIONSHERD BETRIEBENES DRAHTLOSES KÜCHENGERÄT
APPAREIL DE CUISINE SANS FIL ACTIONNÉ SUR UNE CUISINIÈRE CHAUFFANT PAR INDUCTION

(30) Priority: 29.12.2011 TR 201113235
(43) Date of publication of application: 05.11.2014
(73) Proprietor: Arçelik Anonim Sirketi, 34950 Istanbul (TR)
(72) Inventor: YAMAN, Onur, 34950 Istanbul (TR); YORUKOGLU, Ahmet, 34950 Istanbul (TR); HAZIR, Sefa, 34950 Istanbul (TR)
(86) International application number: PCT/EP2012/076567
(87) International publication number: WO 2013/098227

(56) References cited:
- EP-A1- 0 394 148
- EP-A1- 1 571 889
- DE-A1-102006 017 801
- US-A- 2 133 494

## Description

The present invention relates to a wireless kitchen appliance that is operated on the induction heating cooker.

The use of kitchen appliances on the induction heating cooker by the principle of wireless power transmission is known. The wireless kitchen appliances are passive heating devices like pots and pans, active heating devices like kettle, coffee machine, toaster or electromechanical devices like mixer, blender that are operated with the electric motor. In some embodiments, user interface, sensors and communication means like RFID that provide communication with the induction heating cooker are disposed on the wireless kitchen appliances. Low level electrical power is required for energizing the electronic circuits and the microprocessor, that controls these circuits, on the wireless kitchen appliance. This electrical power is supplied from the induction coil in the induction heating cooker by means of a receiver coil. The microcontroller and the other electronic circuits have to be supplied with an uninterrupted and constant voltage. If the voltage level of the power source that feeds these components is lower or higher than the required voltage, the operation of the microcontroller and the other electronic circuits is interrupted and the wireless kitchen appliance cannot be operated on the induction heating cooker in the desired manner. A ferromagnetic container is placed on the induction heating cooker for the normal heating operation and the user can heat by means of a knob scaled at different power levels for example between 1 to 9. The present power scale settings used for the ferromagnetic container are also used for the wireless kitchen appliance. If the wireless kitchen appliance is, for example a kettle, the power adjustment of the resistant heater can be made and the speed of the electric motor is adjusted in an appliance like the mixer with electric motor. When the power scale setting of the induction heating cooker is changed by the user, the electrical voltage supplied to the power source circuitry also changes and the desired continuous and constant voltage cannot be obtained. Furthermore, the fluctuations in the mains voltage whereto the induction heating cooker is connected affect the power control circuitry adversely. In the state of the art, power storage elements like battery are used in order to keep the voltage supplied by the power control circuitry constant, however inconveniences arise like requiring a separate structure for running out, changing or charging of the battery. Supercapacitors can also be used instead of the battery however the cost is quite high.

The International Patent Application No. WO9941950 relates to a cooking vessel that is used in induction heating cooktops.

The International Patent Application No. WO2010080738 relates to a smart cookware that is wirelessly operated with an inductive power supply.

The United States Patent No. US7355150 relates to a cooking appliance that is energized with non-contact power supply.

The aim of the present invention is the realization of a kitchen appliance that is operated wirelessly on the induction heating cooker and of which the electronic circuits are prevented from being affected by the voltage changes.

The kitchen appliance realized in order to attain the aim of the present invention, explicated in the first claim and the respective claims thereof, is an appliance like cooking container, kettle, coffee machine or mixer that is operated wirelessly on an induction heating cooker. User interface, sensors and communication members that provide communication with the induction heating cooker are disposed in the kitchen appliance. The electronic circuits, switches etc. that operate these members are controlled by the microcontroller. The microcontroller and the other electronic circuits are energized by a power control circuitry with low level DC voltage. The kitchen appliance comprises a receiver coil that partially receives the power generated by the induction coil of the induction heating cooker whereon the kitchen appliance is operated and provides transfer to the power control circuitry, a rectifier that converts the AC voltage delivered from the receiver coil to DC voltage, a buffer capacitor and a resonant circuit that is disposed between the receiver coil and the rectifier, the resonant capacitors of which are connected to the receiver coil in series or in parallel, that regulates the voltage transferred to the power control circuitry, thus providing the power control circuitry, the microcontroller and the other electronic circuits to be supplied with constant value and uninterrupted DC voltage.

In an embodiment of the present invention, the voltage changes in the power control circuitry are detected by means of a peak voltage tracker disposed between the rectifier and the buffer capacitor.

In another embodiment of the present invention, the resonant circuit comprises switching means that are connected in series to each of the resonant capacitors and that activate or deactivate the resonant capacitors. The microcontroller decreases the voltage by increasing the number of resonant capacitors activated by the switching means if the voltage level detected by the peak voltage tracker is higher than the desired voltage level and increases voltage by decreasing the number of resonant capacitors activated if the voltage level detected by the peak voltage tracker is lower.

In another embodiment of the present invention, the microcontroller detects whether the voltage is high or low by measuring the frequency of the power transferred from the receiver coil and activates or deactivates the resonant capacitors depending on the measured frequency values, in other words, increases or decreases the voltage.

In another embodiment of the present invention, the microcontroller deactivates components like LED, display, backlight that draw high power in the kitchen appliance in situations wherein the induction heating cooker is operated at low power settings.

In the kitchen appliance of the present invention, the microcontroller and the other electronic circuits are provided to be supplied with constant and uninterrupted DC voltage. Under conditions wherein the voltage applied from outside to the power control circuitry changes, occurrence of error in the microcontroller and the electronic circuits is prevented, and the microcontroller and the electronic circuits are protected from variable voltage conditions. Elements like battery, supercapacitor are not required in order to keep the voltage level provided by the power control circuitry constant.

The kitchen appliance realized in order to attain the aim of the present invention is illustrated in the attached figures, where:

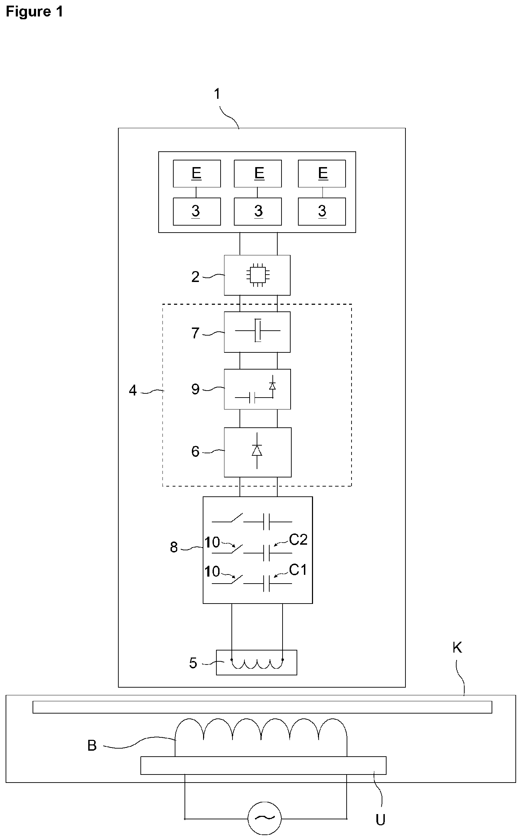

Figure 1 - is the schematic view of the wireless kitchen appliance operated on an induction heating cooker.
Figure 2 - is the schematic view of the wireless kitchen appliance operated on an induction heating cooker in another embodiment of the present invention.

The elements illustrated in the figures are numbered as follows:
1. Kitchen appliance
2. Microcontroller
3. Electronic circuit
4. Power control circuitry
5. Receiver coil
6. Rectifier
7. Buffer capacitor
8. Resonant circuit
9. Peak voltage tracker
10. Switching means
11. High power receiver coil

The kitchen appliance (1) is suitable for being operated wirelessly on an induction heating cooker (K) with the power generated by the induction coil (B). The induction coil (B) situated in the induction heating cooker (K) is operated by a power source unit (U) that converts the AC mains voltage to DC voltage as in the state of the art.

The kitchen appliance (1) comprises a programmable microcontroller (2), one or more than one electronic circuit (3) that provides the microcontroller (2) to control the communication and/or control means (E), like RFID, user interface and sensor, providing communication with the induction heating cooker (K) whereon the kitchen appliance (1) is operated, a power control circuitry (4) that supplies the microcontroller (2) and the electronic circuits (3) with low level DC voltage, a receiver coil (5) that partially collects and provides transfer of the power generated by the induction coil (B) in the induction heating cooker (K) to the power control circuitry (4), a rectifier (6) disposed in the power control circuitry (4), that converts the AC voltage delivered from the receiver coil (5) to DC voltage and a buffer capacitor (7) which filters the DC voltage at the rectifier (6) outlet.

The kitchen appliance (1) of the present invention comprises a resonant circuit (8) that is controlled by the microcontroller (2), that is disposed between the receiver coil (5) and the rectifier (6), that has one or more than one resonant capacitor (C1, C2) that creates a resonant frequency of certain value by forming LC circuit (resonating) with the receiver coil (5) and that provides the power control circuitry (4) to supply the microcontroller (2) and the electronic circuits (3) with uninterrupted and constant value voltage by regulating the voltage at the outlet of the receiver coil (5).

In an embodiment of the present invention, the resonant circuit (8) is a serial resonant circuit (8) formed by resonant capacitors (C1, C2) connected to each other in parallel and connected in series to the receiver coil (5).

In another embodiment of the present invention, the resonant circuit (8) is a parallel resonant circuit (8) formed by resonant capacitors (C1, C2) connected to each other and to the receiver coil (5) in parallel.

In the kitchen appliance (1) of the present invention, when the power scale setting is changed on the induction heating cooker (K), the voltage level that is transferred from the induction coil (B) to the receiver coil (5) and hence from the receiver coil (5) to the power control circuitry (4) changes. Particularly, if a low power scale is selected, the duty ratio of the induction coil (B) decreases and power is delivered to the receiver coil (5) intermittently and the transferred voltage level falls below the level that can operate the microcontroller (2) and the electronic circuits (3). If a high power scale is selected on the induction heating cooker (K), the duty ratio of the induction coil (B) increases and power is delivered uninterruptedly from the receiver coil (5), however, in this situation, the transferred voltage level rises to a level that can damage the microcontroller (2) and the electronic circuits (3). The resonant circuit (8) output voltage is regulated by the microcontroller (2) in situations wherein the voltage transferred from the receiver coil (5) changes, if the voltage level is low, it is increased, if high, then decreased, thus the power control circuitry (4) is provided to supply the microcontroller (2) and the electronic circuits (3) with a constant, uninterrupted and ripple-free DC voltage (for example 5V). The microcontroller (2) is prevented from erasing the data relating to the program being implemented in the kitchen appliance (1) by resetting at any moment under variable voltage conditions and the electronic circuits (3) are provided to operate soundly, protected from fluctuating voltages and prevented from malfunctioning.

The resonant circuit (8) comprises one or more than one switching means (10), for example relays, that is controlled by the microcontroller (2), that is connected in series to each of the resonant capacitors (C1, C2) and that activates or deactivates the resonant capacitors (C1, C2) by switching depending on the level of voltage desired to be decreased/increased.

In an embodiment of the present invention, the kitchen appliance (1) comprises a peak voltage tracker (9) disposed between the rectifier (6) and the buffer capacitor (7), tracking the peak values of the voltage at the outlet of the rectifier (6) and feeding back to the microcontroller (2).

The microcontroller (2) regulates the output voltage of the resonant circuit (8), provides the voltage transferred to the power control circuitry (4) by the receiver coil (5) to be kept constant by activating or deactivating the resonant capacitors (C1, C2) by means of the switching means (10) depending on the feedback received from the peak voltage tracker (9) when the power level of the power control circuitry (4) changes under conditions of power scale setting changes, fluctuations in the DC mains voltage that operates the induction coil (B) and in variable power requirements of the electronic circuits (3).

The microcontroller (2) increases the number of resonant capacitors (C1, C2) activated by means of the switching means (10) if the power level transferred from the receiver coil (5) and fed-back by the peak voltage tracker (9) is higher than the voltage level whereat the microcontroller (2) and the electronic circuits (3) are kept active, adjusts the frequency of the resonant circuit (8) to a value that does not match with the frequency of the induction coil (B); thus the amplitude of the AC voltage decreases at the outlet of the resonant circuit (8) and the voltage level transferred from the receiver coil (5) to the power control circuitry (4) is decreased.

The microcontroller (2) adjusts the frequency of the resonant circuit (8) to a value that matches with the frequency of the induction coil (B) by decreasing the number of resonant capacitors (C1, C2) activated by means of the switching means (10) if the power level fed-back by the peak voltage tracker (9), transferred from the receiver coil (5) is lower than the voltage level whereat the microcontroller (2) and the electronic circuits (3) are kept active; thus the amplitude of the AC voltage increases at the outlet of the resonant circuit (8) and the voltage level transferred from the receiver coil (5) to the power control circuitry (4) is increased.

When the induction coil (B) is operated at different power settings, not only the voltage transferred to the receiver coil (5) changes but the frequency also changes. Accordingly, the frequency changes since the power transferred from the receiver coil (5) to the power control circuitry (4) is a transformation of the power received from the induction coil (B). When the induction coil (B) is operated at low power level, the voltage of the power transferred to the receiver coil (5) and from the receiver coil (5) to the power control circuitry (4) decreases and the frequency increases and when the induction coil (B) is operated at high power level, the voltage of the power transferred to the receiver coil (5) and from the receiver coil (5) to the power control circuitry (4) increases and the frequency decreases.

In an embodiment of the present invention, the microcontroller (2) detects whether or not the voltage is higher or lower than required by measuring the frequency of the power transferred from the induction coil (B) to the receiver coil (5) and from to the receiver coil (5) to the power control circuitry (4), and activates or deactivates the resonant capacitors (C1, C2) and provides the output voltage of the resonant circuit (8) to be regulated by actuating the switching means (10) depending on the measured frequency values.

In this embodiment, the microcontroller (2) decides that the voltage is higher than the desired level if the frequency value of the power transferred from the receiver coil (5) is lower than the predetermined frequency value stored in its memory and provides the voltage level transferred from the receiver coil (5) to the power control circuitry (4) to be decreased by increasing the number of resonant capacitors (C1, C2) activated by means of the switching means (10).

The microcontroller (2) decides that the voltage is lower than the desired level if the frequency value of the power transferred from the receiver coil (5) is higher than the predetermined frequency value stored in its memory and provides the voltage level transferred from the receiver coil (5) to the power control circuitry (4) to be increased by decreasing the number of resonant capacitors (C1, C2) activated by means of the switching means (10).

When the induction heating cooker (K) is operated by the user at low power setting, the durations whereat the induction coil (B), that particularly operates in on/off manner, is "off" are prolonged and in this case it becomes difficult to supply uninterrupted voltage for the microcontroller (2). In situations wherein the induction heating cooker (K) is operated at low power settings and in cases wherein the power stored in the buffer capacitor (7) is not sufficient for supplying the microcontroller (2) with constant voltage level, components like LED, display, backlight disposed on in the kitchen appliance (1) and that draw high power are deactivated by the microcontroller (2), decreasing the load of the buffer capacitor (7) and the microcontroller (2) is provided to be supplied with uninterrupted voltage.

In an embodiment of the present invention, the kitchen appliance (1) is a ferromagnetic cooking container that is heated with the induction energy generated by the induction coil (B).

In another embodiment of the present invention, the kitchen appliance (1) is an active heating appliance having a resistant heater like kettle or toaster.

In another embodiment of the present invention, the kitchen appliance (1) is an electromechanical appliance operated by an electric motor like mixer, mixer, blender food processor etc.

In an embodiment of the present invention, the kitchen appliance (1) is an automatic coffee machine and cooking control is provided by an infrared sensor, the power control circuitry (4) supplies the electronic circuit (3) and the microcontroller (2), controlling the infrared sensor with uninterrupted and constant voltage by means of the resonant circuit (8).

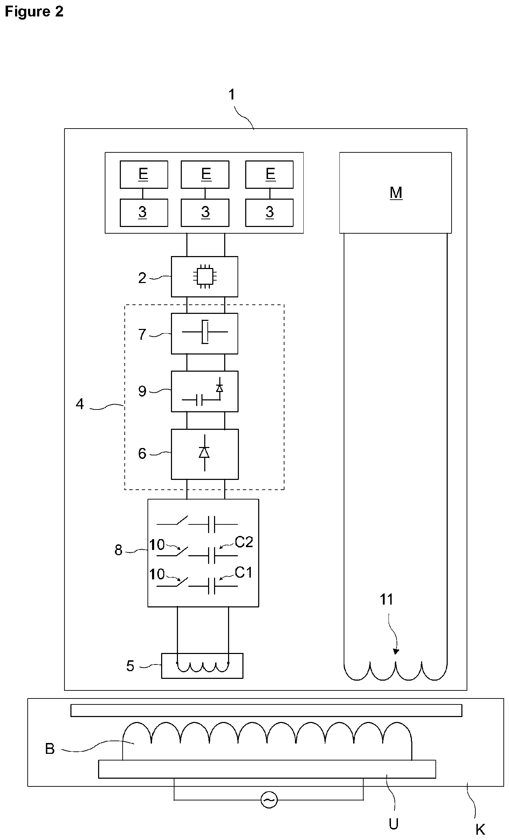

In another embodiment of the present invention, the kitchen appliance (1) comprises one or more than one high power receiver coil (11) that delivers power from the induction coil (B) for operating members (M) that draw high current like heater or motor (Figure 2).

In the kitchen appliance (1) of the present invention, the voltage transferred from the receiver coil (5) to the power control circuitry (4) is regulated by the resonant circuit (8), providing the microcontroller (2) and the electronic circuits (3) to be supplied with constant and uninterrupted voltage. In situations wherein the user changes the settings of the induction heating cooker (K) and in variable mains AC voltage conditions, occurrence of error in the microcontroller (2) and the electronic circuits (3) is prevented and the microcontroller (2) and the electronic circuits (3) are protected from variable voltage conditions. High cost and hard to use components like battery or supercapacitor are not required for keeping the voltage level supplied by the power control circuitry (4) constant.

It is to be understood that the present invention is not limited by the embodiments disclosed above and a person skilled in the art can easily introduce different embodiments. These should be considered within the scope of the protection postulated by the claims of the present invention.

## Claims

1. A kitchen appliance (1), suitable for being operated on an induction heating cooker (K) with the power generated by the induction coil (B), comprising a microcontroller (2), one or more than one electronic circuit (3) that provides the communication and/or control means (E) to be controlled by the microcontroller (2), a power control circuitry (4) that supplies the microcontroller (2) and the electronic circuits (3) with low level DC voltage, a receiver coil (5) that partially collects and provides transfer of the power generated by the induction coil (B) to the power control circuitry (4), a rectifier (6) that converts the AC voltage delivered from the receiver coil (5) to DC voltage and a buffer capacitor (7) which filters the DC voltage at the rectifier (6) outlet, **characterized by** a resonant circuit (8) that is disposed between the receiver coil (5) and the rectifier (6), that has one or more than one resonant capacitor (C1, C2) and that provides the power control circuitry (4) to supply the microcontroller (2) and the electronic circuits (3) with constant voltage by regulating the voltage at the outlet of the receiver coil (5).

2. A kitchen appliance (1) as in Claim 1, **characterized by** the serial resonant circuit (8) that is formed by the resonant capacitors (C1, C2) connected to each other in parallel and connected in series to the receiver coil (5).

3. A kitchen appliance (1) as in Claim 1, **characterized by** the parallel resonant circuit (8) that is formed by the resonant capacitors (C1, C2) connected in parallel to the receiver coil (5).

4. A kitchen appliance (1) as in any one of the above Claims, **characterized by** the resonant circuit (8) having one or more than one switching means (10) connected in series to each of the resonant capacitors (C1, C2) and controlled by the microcontroller (2).

5. A kitchen appliance (1) as in any one of the above Claims, **characterized by** a peak voltage tracker (9) disposed between the rectifier (6) and the buffer capacitor (7), that tracks the peak values of the voltage at the outlet of the rectifier (6) and feeds back to the microcontroller (2).

6. A kitchen appliance (1) as in Claim 5, **characterized by** the microcontroller (2) that activates or deactivates the resonant capacitors (C1, C2) by means of the switching means (10) depending on the feedback received from the peak voltage tracker (9).

7. A kitchen appliance (1) as in any one of the Claims 1 to 4, **characterized by** the microcontroller (2), that detects whether or not the voltage is high or low by measuring the frequency of the power transferred from the receiver coil (5) and activates or deactivates the resonant capacitors (C1, C2) depending on the measured frequency values.

8. A kitchen appliance (1) as in any one of the above Claims, **characterized by** the microcontroller (2) that deactivates the components like LED, display, backlight which draw high power in situations wherein the induction heating cooker (K) is operated at low power settings.

9. A kitchen appliance (1) as in any one of the above Claims, **characterized by** being a ferromagnetic cooking container that is heated with the induction energy generated by the induction coil (B).

10. A kitchen appliance (1) as in any one of the Claims 1 to 8, **characterized by** being an active heating appliance having a resistant heater.

11. A kitchen appliance (1) as in any one of the Claims 1 to 8, **characterized by** being an electromechanical appliance operated by an electric motor.

12. A kitchen appliance (1) as in any one of the Claims 1 to 8, **characterized by** being a coffee machine wherein cooking control is provided by an infrared sensor.

13. A kitchen appliance (1) as in any one of the above Claims, **characterized by** one or more than one high power receiver coil (11) that transfers power from the induction coil (B) for operating members (M) like the heater or motor.

## Patentansprüche

1. Ein Küchengerät (1) zum Betreiben auf einem Induktionsheizofen (K) mittels einer durch eine Induktionsspule (B) erzugten Energie umfassend eine Mikrosteuerung (2), eine oder mehrere elektronische Schaltung (en) (3), um die Steuerung der Kommunikations- und / oder Steuermitteln (E) durch die Mikrosteuerung (2) sicherstellt (sicherstellen), eine Leistungssteuerschaltung (4), die die Mikrosteuerung (2) versorgt, und elektronische Schaltungen (3), die eine Gleichspannung in niedrigem Niveau aufweisen, eine Empfängerspule (5), die die durch eine Induktionsspule (B) erzugten Energie ansammelt und an die Leistungssteuerschaltung (4) überleitet, einen Gleichrichter (6), der die von der Empfängerspule (5) erzugten AC Spannung in die DC Spannung umwandelt, und einen Pufferkondensator (7), der die DC Spannung am Ausgang des Gleichrichters (6) filtriert **dadurch gekennzeichnet dass** es eine Resonanzschaltung (8), die zwischen der Empfängerspule (5) und dem Gleichrichter (6) eingestellt ist, die einen oder mehrere Resonanzkondensator (en) (C₁, C₂) aufweist und die die Versorgung Mikrosteuerung (2) durch die Leistungssteuerschaltung (4) sicherstellt sowie elektronische Schaltungen (3), die eine konstante Spannung, die die Spannung am Ausgang der Empfängerspule (5) einrichtet, umfasst.

2. Ein Küchengerät (1) nach Anspruch 1 **gekennzeichnet durch** eine Reihenresonanzschaltung (8), die mittels den Resonanzkondensatoren (C₁, C₂) ausgebildet sind, die parallel zueinander und in Reihe an die Empfängerspule (5) verbunden sind.

3. Ein Küchengerät (1) nach Anspruch 1 **gekennzeichnet durch** eine Reihenresonanzschaltung (8), die mittels den Resonanzkondensatoren (C₁, C₂) ausgebildet sind, die parallel an die Empfängerspule (5) verbunden sind.

4. Ein Küchengerät (1) nach einem der vorhergehenden Ansprüche **gekennzeichnet durch** eine Reihenresonanzschaltung (8), die einen oder mehreren Schalter (n) (10) aufweist, der (die) zu jedem Resonanzkondensator (C₁, C₂) in Reihen verbunden ist (sind) und durch die Mikrosteuerung (2) kontrolliert wird (werden).

5. Ein Küchengerät (1) nach einem der vorhergehenden Ansprüche **gekennzeichnet durch** eine Überwachungseinrichtung (9) für die Spitzenspannung, die zwischen dem Gleichrichter (6) und dem Pufferkondensator (7) eingesetzt ist und die Spitzwerte der Spannung am Ausgang des Gleichrichters (6) beobachtet und die Rückführung zur Mikrosteuerung (2) durchführt.

6. Ein Küchengerät (1) nach Anspruch 5 **gekennzeichnet durch** eine Mikrosteuerung (2), die die Resonanzkondensatoren (C₁, C₂) durch den Schaltern (10) abhängig von der Rückmeldung aus Überwachungseinrichtung (9) für die Spitzenspannung aktiviert oder deaktiviert.

7. Ein Küchengerät (1) nach einem der vorhergehenden Ansprüche 1 bis 4 **gekennzeichnet durch** eine Mikrosteuerung (2), die durch Messen der Frequenz der aus Empfängerspule (5) übergeleitete Energie identifiziert, ob die Spannung hoch oder niedrig ist und in Abhängigkeit von den Frequenzwerten die Resonanzkondensatoren (C₁, C₂) aktiviert oder deaktiviert.

8. Ein Küchengerät (1) nach einem der vorhergehenden Ansprüche 1 bis 4 **gekennzeichnet durch** eine Mikrosteuerung (2), die die Bestandteile wie LED, Anzeige, Hintergrundbeleuchtung deaktiviert, da diese eine hohe Energie brauchen, wenn der Induktionsheizofen (K) bei niedrigeren Leistungseinstellungen betrieben ist,

9. Ferromagnetische Kochgefäß (1) **gekennzeichnet durch** die Beheizung durch die Induktionsenergie, die durch Induktionsspule (B) erzugt ist.

10. Ein Küchengerät (1) nach einem der Ansprüche 1 bis 8 **gekennzeichnet durch** ein aktives Heizmittel mit einer Widerstandsheizeinrichtung.

11. Ein Küchengerät (1) nach einem der Ansprüche 1 bis 8 **gekennzeichnet durch** ein elektromechanische Gerät, das mit einem Elektromotor betrieben wird.

12. Ein Küchengerät (1) nach einem der Ansprüche 1 bis 8 **gekennzeichnet durch** eine Kaffeemaschine, deren Kochsteuerung über einen Infrarot-Sensor sichergestellt ist.

13. Ein Küchengerät (1) nach einem der vorhergehenden Ansprüche **gekennzeichnet durch** eine oder mehrere Hochleistungsempfangsspule (n) (11), die aus der Induktionsspule (B) zum Betreiben der Elemente (M), wie Heizgerät oder das Motor, Energie überleitet.

## Revendications

1. Un appareil de cuisine (1), apte à être utilisé sur une cuisinière à chauffage par induction (K) avec la puissance générée par la bobine d'induction (B), **comprenant** un microcontrôleur (2), un ou plus d'un circuit électronique (3) qui fournit les moyens de communication et / ou de commande (E) à être commandés par le microcontrôleur (2), un circuit de commande de puissance (4) qui fournit le microcontrôleur (2) et les circuits électroniques (3) avec une tension DC de niveau faible, une bobine réceptrice (5) qui collecte partiellement et permet le transfert de l'énergie générée par la bobine d'induction (B) au circuit de commande de puissance (4), un redresseur (6) qui convertit la tension AC délivrée par la bobine réceptrice (5) à la tension DC et un condensateur tampon (7) qui filtre la tension DC à la sortie du redresseur (6), **caractérisé par** un circuit résonant (8) qui est disposé entre la bobine réceptrice (5) et le redresseur (6), qui comporte un ou plus d'un condensateur résonnant (C1, C2) et qui permet le circuit de commande de puissance (4) à fournir le microcontrôleur (2) et les circuits électroniques (3) avec la tension constante en régulant la tension à la sortie de la bobine réceptrice (5).

2. Un appareil de cuisine (1) selon la revendication 1, **caractérisé par** le circuit résonnant en série (8) qui est formé par les condensateurs résonnants (C1, C2) connectés l'un à l'autre en parallèle et connectés en série à la bobine réceptrice (5).

3. Un appareil de cuisine (1) selon la revendication 1, **caractérisé par** le circuit de résonance parallèle (8) qui est formé par les condensateurs résonnants (C1, C2) connectés en parallèle à la bobine réceptrice (5).

4. Un appareil de cuisine (1) selon l'une quelconque des revendications précédentes, **caractérisé par** le circuit résonnant (8) comportant un ou plusieurs moyens de commutation (10) connectés en série à chacun des condensateurs résonnants (C1, C2) et commandés par le microcontrôleur (2).

5. Un appareil de cuisine (1) selon l'une quelconque des revendications précédentes, **caractérisé par** un traquer de tension de crête (9) disposé entre le redresseur (6) et le condensateur tampon (7), qui suit les valeurs de pic de la tension à la sortie du redresseur (6) et se dirige vers le microcontrôleur (2).

6. Un appareil de cuisine (1) selon la revendication 5, **caractérisé par** le microcontrôleur (2) qui active ou désactive les condensateurs résonnants (C1, C2) au moyen des moyens de commutation (10) en fonction du feedback reçu du traquer de tension de crête (9).

7. Un appareil de cuisine (1) selon l'une quelconque des revendications 1 à 4, **caractérisé par** le microcontrôleur (2), qui détecte si la tension est élevée ou faible en mesurant la fréquence de la puissance transférée de la bobine réceptrice (5) et active ou désactive les condensateurs résonnants (C1, C2) en fonction des valeurs de fréquence mesurées.

8. - Un appareil de cuisine (1) selon l'une quelconque des revendications précédentes, **caractérisé par** le microcontrôleur (2) qui désactive les composants comme LED, affichage, rétro-éclairage qui émettent une puissance élevée dans des situations dans lesquelles la cuisinière à chauffage par induction (K) est fonctionnée à des réglages de puissance faible.

9. - Un appareil de cuisine (1) selon l'une quelconque des revendications précédentes, **caractérisé en ce qu'**il s'agit d'un récipient de cuisson ferromagnétique qui est chauffé avec l'énergie d'induction générée par la bobine d'induction (B).

10. - Un appareil de cuisine (1) selon l'une quelconque des revendications 1 à 8, **caractérisé en ce qu'**il s'agit d'un appareil de chauffage actif comportant un réchauffeur résistant.

11. - Un appareil de cuisine (1) selon l'une quelconque des revendications 1 à 8, **caractérisé en ce qu'**il s'agit d'un appareil électromécanique actionné par un moteur électrique.

12. - Un appareil de cuisine (1) selon l'une quelconque des revendications 1 à 8, **caractérisé en ce qu'**il s'agit d'une machine à café où la commande de cuisson est prévue par un capteur infrarouge.

13. - Un appareil de cuisine (1) selon l'une quelconque des revendications précédentes, **caractérisé par** une ou plus d'une bobine réceptrice de puissance élevée (11) qui transfère la puissance de la bobine d'induction (B) pour les éléments de commande (M) comme le chauffage ou le moteur.
